# EUROPÄISCHE PATENTSCHRIFT

(11) **EP 3 642 493 B1**
(45) Veröffentlichungstag und Bekanntmachung des Hinweises auf die Patenterteilung: **29.09.2021**
(21) Anmeldenummer: 18732250.8
(22) Anmeldetag: 08.06.2018
(51) Int. Cl.: F16B 39/02, F16B 7/02, F16B 39/28, F16C 3/00, F16C 3/02, F16D 1/06

(54) **VERBINDUNG, AUFWEISEND EINE IN EINE HOHLWELLE ZUMINDEST TEILWEISE EINGESTECKTE WELLE UND EIN AUF DIE HOHLWELLE AUFGESTECKTES RINGTEIL UND PLANETENGETRIEBE**
CONNECTION COMPRISING A SHAFT, AT LEAST PARTLY INSERTED IN A HOLLOW SHAFT AND A RING SET ON THE HOLLOW SHAFT AND A PLANETARY GEAR
CONNEXION COMPRENANT UN ARBRE AU MOINS PARTIELLEMENT ENGAGÉ DANS UN ARBRE CREUX ET UN ANNEAU GLISSÉ SUR L'ARBRE CREUX ET UN TRAIN PLANETAIRE

(30) Priorität: 22.06.2017 DE 102017005888
(43) Veröffentlichungstag der Anmeldung: 29.04.2020
(73) Patentinhaber: SEW-EURODRIVE GmbH & Co. KG, 76646 Bruchsal (DE)
(72) Erfinder: HALLER, Sascha, 76135 Karlsruhe (DE); SCHILLINGER, Jens, 76437 Rastatt (DE); DENKHAUS, Max, 76698 Ubstadt-Weiher (DE)
(86) Internationale Anmeldenummer: PCT/EP2018/025150
(87) Internationale Veröffentlichungsnummer: WO 2018/233873

(56) Entgegenhaltungen:
- CN-U- 204 921 723
- DE-A1- 10 311 572
- DE-A1-102014 007 063
- DE-U1-202013 105 568

## Beschreibung

Die Erfindung betrifft eine Verbindung, aufweisend eine in eine Hohlwelle zumindest teilweise eingesteckte Welle und ein auf die Hohlwelle aufgestecktes Ringteil und ein Planetengetriebe.

Es ist allgemein bekannt, dass bei einem Spannring, eine kraftschlüssige Verbindung mittels eines Ringteils herstellbar ist.

Aus der DE 103 11 572 A1 ist als nächstliegender Stand der Technik eine Anordnung zur Verbindung eines rohrförmigen Elements mit einem darin erstreckten Körper bekannt.

Aus der DE 10 2014 007063 A1 ist eine Befestigungsvorrichtung zum konzentrischen Befestigen einer Welle an eine Drehgeberwelle und Motorfeedback-System mit dieser Befestigung bekannt.

Der Erfindung liegt daher die Aufgabe zugrunde, eine Verbindung weiterzubilden, wobei die Verbindung auf der schnell drehenden, also eintreibenden, Seite eines Planetengetriebes verwendbar ist.

Erfindungsgemäß wird die Aufgabe bei der Verbindung nach den in Anspruch 1 und bei dem Planetengetriebe nach den in Anspruch 13 angegebenen Merkmalen gelöst.

Wichtige Merkmale der Erfindung bei der Verbindung sind, dass sie eine in eine Hohlwelle zumindest teilweise eingesteckte Welle und ein auf die Hohlwelle aufgestecktes Ringteil, insbesondere eines Spannrings, aufweist, wobei das Ringteil axial begrenzt ist von einem an der Welle ausgeformten, insbesondere radial hervorstehenden, Bund und/oder das Ringteil an einem oder dem Bund der Welle, insbesondere an einem an der Welle ausgeformten, insbesondere radial hervorstehenden, Bund, anliegt,
wobei die Hohlwelle vom Bund beabstandete Schlitze, insbesondere Axialschlitze aufweist,
wobei das Ringteil, insbesondere an seiner Ringöffnung und/oder insbesondere an seinem dem Bund zugewandten axialen Endbereich, eine Fase aufweist,
so, dass der Innendurchmesser des Ringteils in dem von der Fase überdeckten axialen Bereich größer ist als der Innendurchmesser in demjenigen axialen Bereich, in welchem das Ringteil die Hohlwelle berührt. Erfindungsgemäß ist die Fase als krümmungskegelförmige Fase ausgeführt, welche durch Rotation eines gekrümmten Kurvenabschnitts entsteht, der ein Ellipsenabschnitt ist, wobei die Fase glatt über in denjenigen Bereich des Ringteils, welcher die Hohlwelle berührt, geht.

Von Vorteil ist dabei, dass die Verbindung auswuchtbar und mit geringem Massenträgheitsmoment ausführbar ist. Dabei ist die kraftschlüssige Verbindung mittels Anziehen der Schraube und somit bewirktem Aufschrumpfen des Ringteils auf die Hohlwelle effektiv ausführbar. Also ist mit geringem Aufwand an Masse ein hohes Verbindungsmoment erreichbar.

Bei einer vorteilhaften Ausgestaltung weist das Ringteil an seinem Umfang einen radial und axial durchgehenden Schlitz auf,
wobei eine Schraube durch den Schlitz hindurchgeführt ist und der Schraubenkopf der Schraube ist an einer Fläche abgestützt, wobei der Gewindebereich der Schraube in eine auf der von der Fläche abgewandten Seite des Schlitzes angeordneten Gewindebohrung eingeschraubt ist,
insbesondere wobei die Schraube tangential gerichtet ist. Von Vorteil ist dabei, dass mittels der schraube beim Einschrauben der Schraube in den Gewindebereich die schlitzbreite verringerbar ist und somit das Ringteil auf die Hohlwelle aufschrumpfbar ist.

Bei einer vorteilhaften Ausgestaltung weist das Ringteil in einem in Umfangsrichtung von dem Schlitz beabstandeten Bereich eine radial gerichtete Bohrung auf, insbesondere zum Auswuchten des Spannrings. Von Vorteil ist dabei, dass die Verbindung auswuchtbar ist, also Unwucht vermeidbar ist.

Bei einer vorteilhaften Ausgestaltung ist die radiale Breite des Ringteils unabhängig vom Umfangswinkel, insbesondere mit Ausnahme des vom Schlitz überdeckten Umfangswinkelbereichs. Von Vorteil ist dabei, dass eine einfache Herstellung ausführbar ist.

Bei einer vorteilhaften Ausgestaltung überlappt der vom in die Hohlwelle eingesteckten Bereich der Welle überdeckte axiale Bereich mit dem vom Ringteil überdeckten axialen Bereich zumindest überlappt. Insbesondere darf der vom in die Hohlwelle eingesteckten Bereich der Welle überdeckte axiale Bereich also dem vom Ringteil überdeckten axialen Bereich gleichen oder ihn umfassen. Von Vorteil ist dabei, dass die Hohlwelle auf die in die Hohlwelle eingesteckte Welle aufschrumpfbar ist.

Bei einer vorteilhaften Ausgestaltung weist die Hohlwelle einen geschlitzten Bereich auf, welcher die Schlitze, insbesondere die Axialschlitze, aufweist. Von Vorteil ist dabei, dass die Hohlwelle im geschlitzten Bereich elastischer ist als im sonstigen Bereich.

Bei einer vorteilhaften Ausgestaltung sind die Schlitze der Hohlwelle in Umfangsrichtung regelmäßig voneinander beabstandet. Von Vorteil ist dabei, dass eine einfache Herstellung ermöglicht ist.

Bei einer vorteilhaften Ausgestaltung sind die Schlitze durch die Hohlwelle, insbesondere durch die Wandung der Hohlwelle, radial durchgehend ausgeführt und/oder axial gerichtet. Von Vorteil ist dabei, dass eine hohe Elastizität erreichbar ist.

Bei einer vorteilhaften Ausgestaltung ist die Anzahl der Schlitze zwei oder größer. Von Vorteil ist dabei, dass eine unwuchtfreie Anordnung der Schlitze ausführbar ist, insbesondere durch regelmäßige Beabstandung der Schlitzte in Umfangsrichtung.

Bei einer vorteilhaften Ausgestaltung ist die Schraubenachse der Schraube tangential ausgerichtet. Von Vorteil ist dabei, dass eine einfache Herstellung ermöglicht ist.

Bei einer vorteilhaften Ausgestaltung weist die Hohlwelle in dem von dem Ringteil überdeckten axialen Bereich einen konstanten Außendurchmesser auf. Von Vorteil ist dabei, dass das Ringteil mittels einer einfach herstellbaren Fase außerhalb des geschlitzten Bereichs der Hohlwelle von der Hohlwelle beabstandbar ist.

Bei einer vorteilhaften Ausgestaltung berührt der von der Fase überdeckte axiale Bereich den vom Bund überdeckten axialen Bereich und/oder grenzt an diesen an. Von Vorteil ist dabei, dass der zum Bund benachbarte Bereich keine Berührfläche zwischen Ringteil und Hohlwelle aufweist. Somit ist in diesem Bereich, der an den geschlitzten Bereich angrenzt, ein Abstand zwischen Ringteil und Hohlwelle vorhanden. Auf diese Weise leitet das Ringteil die gesamte Aufschrumpfkraft in den geschlitzten Bereich ein und nicht in den axial zwischen Bund und geschlitztem Bereich angeordneten Bereich.

Bei einer vorteilhaften Ausgestaltung ist die Wandstärke und/oder der Querschnitt des Ringteils unabhängig vom Umfangswinkel, insbesondere mit Ausnahme des Schlitzes konstant ist. Von Vorteil ist dabei, dass das Auswuchten in einfacher Weise durch eine Radialbohrung ausführbar ist.

Bei einer vorteilhaften Ausgestaltung weist das Ringteil eine radial gerichtete, insbesondere nicht durchgehende Bohrung auf, welche von der Schraube in Umfangsrichtung beabstandet ist,

insbesondere wobei die Bohrung derart tief ausgeführt ist, dass der Spannring, insbesondere also das Ringteil samt Schraube, ausgewuchtet ist, insbesondere also keine Unwucht aufweist. Von Vorteil ist dabei, dass ein Auswuchten einfach ausführbar ist.

Erfindungsgemäß ist die Fase als krümmungskegelförmige Fase ausgeführt. Von Vorteil ist dabei, dass die krümmungskegelige Fase eine höhere Festigkeit bewirkt, weil der Übergang vom Bereich der Fase zum restlichen Bereich festigkeitsoptimiert ausbildbar ist.

Bei einer vorteilhaften Ausgestaltung weist das Ringteil des Spannrings an seiner Innenseite die Fase auf, so dass das Ringteil von der Hohlwelle in dem von der Fase überdeckten axialen Bereich beabstandet ist, wobei der von der Fase überdeckte axiale Bereich sich anschließt an einen geschlitzten Bereich der Hohlwelle, so dass die Schrumpfkraft des Ringteils in den geschlitzten Bereich der Hohlwelle eingetragen wird, nicht aber in den von der Fase überdeckten axialen Bereich. Von Vorteil ist dabei, dass das Ringteil mit weniger Masse ausführbar und somit einfach auswuchtbar ist.

Wichtige Merkmale bei dem Planetengetriebemotor sind, dass die Rotorwelle des das Planetengetriebe antreibenden Elektromotors in eine als Hohlwelle ausgeführte eintreibende Welle eingesteckt ist,
wobei ein Ringteil auf die Hohlwelle aufgesteckt ist,
so, dass die Welle mit der Hohlwelle mittels des Ringteils durch eine vorgenannte Verbindung verbunden ist.

Von Vorteil ist dabei, dass der Spannring an der eintreibenden Seite des Planetengetriebes anordenbar ist. Somit ist an der schnell drehenden Seite eine kraftschlüssige Verbindung bewirkbar.

Weitere Vorteile ergeben sich aus den Unteransprüchen. Die Erfindung ist durch die Ansprüche definiert.

Die Erfindung wird nun anhand von Abbildungen näher erläutert:
In der Figur 1 ist eine Seitenansicht auf einen ersten Spannring einer Verbindung, insbesondere Welle-Nabe Verbindung, eines Planetengetriebemotors dargestellt, wobei die konische Fase 3 nicht nach der Erfindung ist.
In der Figur 2 ist eine zugehörige Schrägansicht dargestellt.
In der Figur 3 ist ein die Ringachse des Spannrings enthaltender Längsschnitt durch den Spannring dargestellt.
In der Figur 4 ist eine Schrägansicht auf einen Bereich einer Hohlwelle 40 dargestellt.
In der Figur 5 ist eine Schrägansicht auf den auf die Hohlwelle 40 aufgeschobenen Spannring dargestellt.
In der Figur 6 ist ein zu Figur 5 zugehöriger Längsschnitt dargestellt, wobei die konische Fase 3 nicht nach der Erfindung ist.
In der Figur 7 ist ein senkrecht zur Ringachse ausgerichteter Querschnitt durch den Spannring dargestellt.
In der Figur 8 ist eine Schrägansicht auf einen erfindungsgemäßen Spannring dargestellt, der sich nur in einer anders ausgeführten Fase 80 unterscheidet vom ersten Spannring.
In der Figur 9 ist ein zur Figur 8 gehöriger, die Ringachse enthaltener Längsschnitt durch den erfindungsgemäßen Spannring dargestellt.
In der Figur 10 ist eine Schrägansicht auf einen nicht erfindungsgemäßen Spannring dargestellt, der sich nur in einer anders ausgeführten Fase 100 unterscheidet vom ersten und erfindungsgemäßen Spannring.
In der Figur 11 ist ein zur Figur 10 gehöriger, die Ringachse enthaltender Längsschnitt durch den dritten Spannring dargestellt.

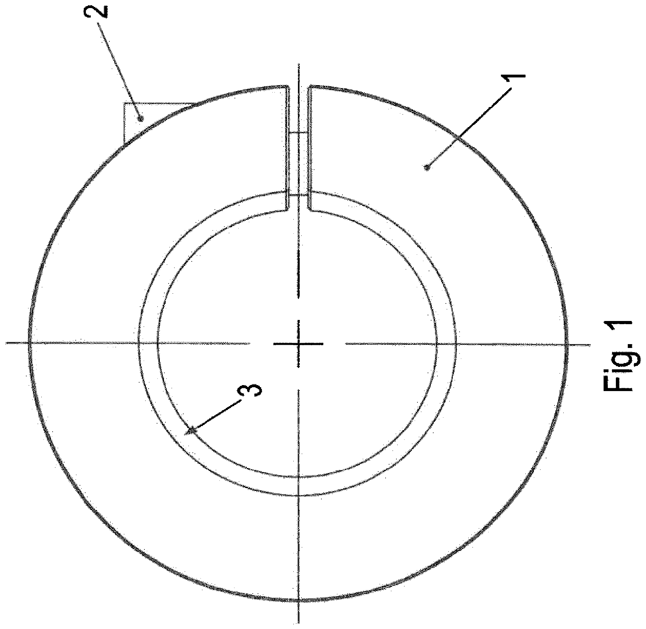

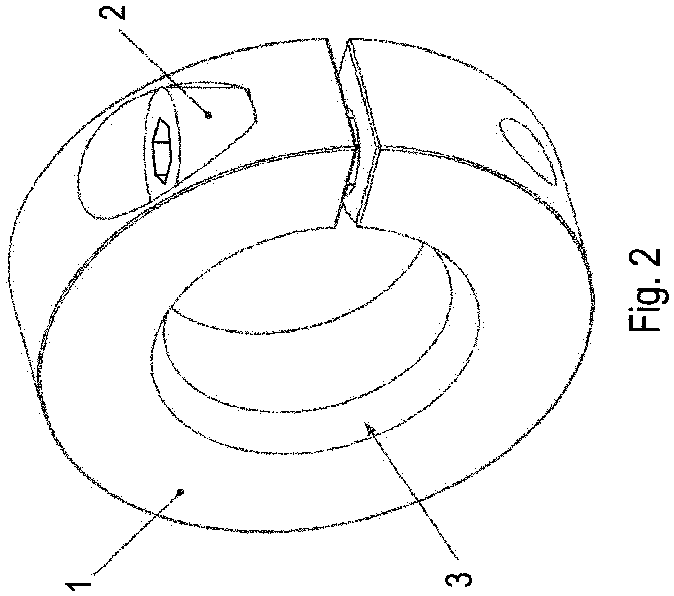

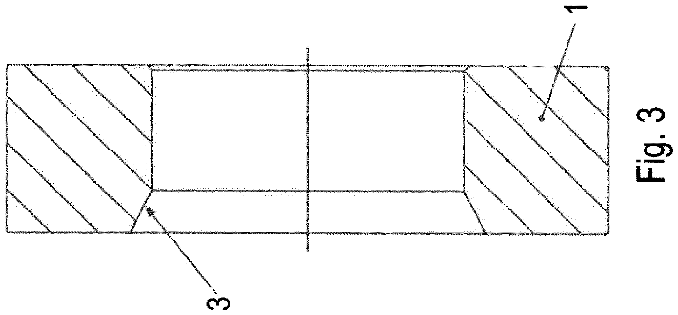

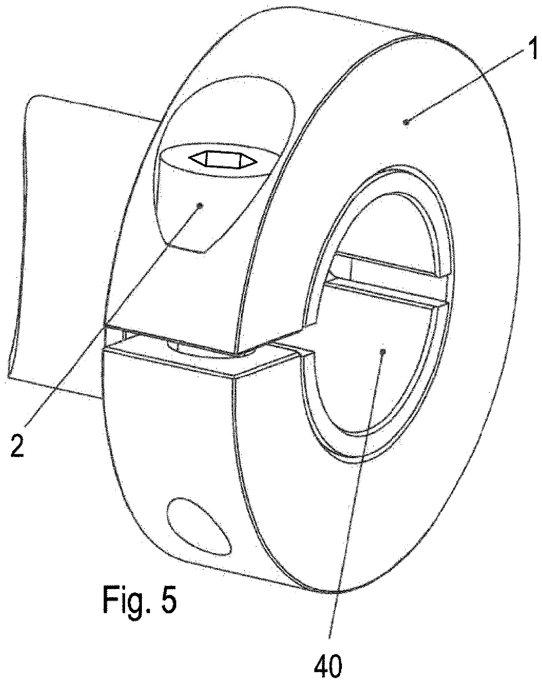

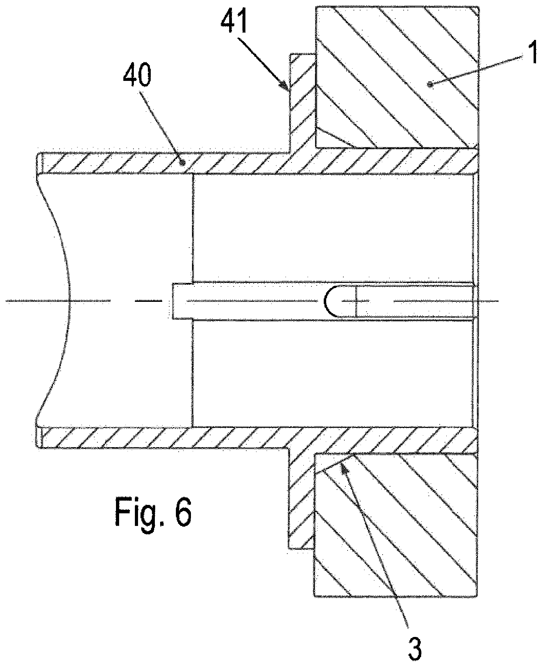

Wie in Figur 1 bis Figur 7 dargestellt, weist der Spannring ein Ringteil 1 auf, welches an einer Umfangsposition durchgehend geschlitzt ausgeführt ist. Dieser Schlitz weist eine konstante Schlitzweite auf, also eine Schlitzweite, welche unabhängig von einer jeweiligen radialen und/oder axialen Position des Schlitzes ist.

Eine tangential in das Ringteil 1 eingebrachte Bohrung nimmt eine Schraube 2 auf, deren Schraubenkopf an einer Fläche anliegt, in welche die Bohrung eingebracht ist. Dabei ist die Bohrung zwischen Fläche und Schlitz als Rundbohrung ausgeführt und vom Schlitz bis zum Austrittsbereich der Bohrung ist die Bohrung als Gewindebohrung ausgeführt, in welche der Gewindebereich der Schraube 2 eingeschraubt ist. Somit ist durch Anziehen der Schraube die Schlitzweite verringerbar und eine im Ringteil 1 aufgenommene Hohlwelle 40 auf eine in diese Hohlwelle 40 eingesteckte Vollwelle aufschrumpfbar:

Am Außenumfang der Hohlwelle 40 ist in einem axialen Bereich ein Bund 41 an der Hohlwelle 40 angeformt. Somit steht dieser Bund 41, insbesondere Bundkragen, radial hervor.

Das Ringteil 1 liegt am Bund 41 an und ist somit axial zum Bund 41 hin begrenzt.

Das Ringteil 1 ist in demjenigen axialen Bereich auf die Hohlwelle 40 aufgesteckt, welcher sich vom Bund 41 bis zum ersten axialen Endbereich erstreckt.

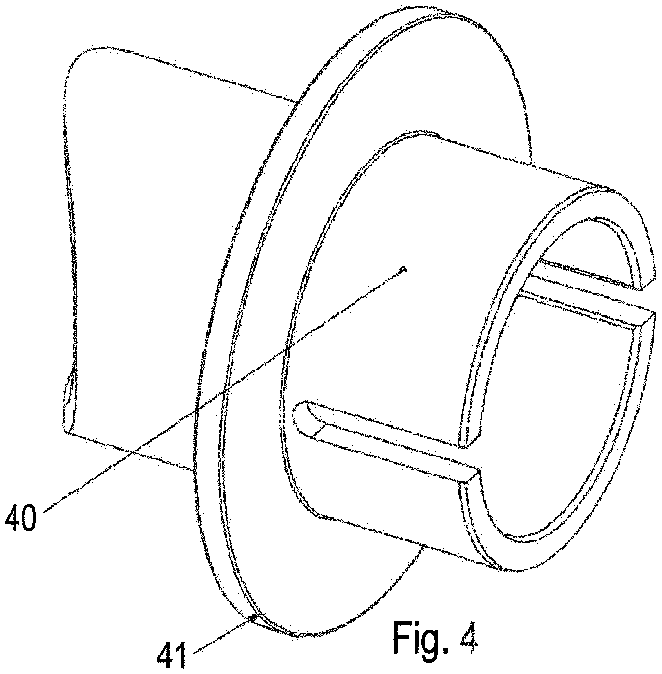

Die Hohlwelle 40 weist axial sich erstreckende, radial durch die Wandung durchgehende Schlitze auf. Dabei sind die Schlitze in Umfangsrichtung regelmäßig voneinander beabstandet. In Figur 4 sind hierzu zwei Schlitze vorgesehen, welche einen Umfangswinkelabstand von 180° zueinander aufweisen.

Die Schlitze erstrecken sich vom ersten axialen Endbereich bis zu einer axialen Position, welche einen nicht verschwindenden Abstand zum Bund 41 aufweist.

Wie oben beschrieben, zieht sich das Ringteil 1 bei Anziehen der Schraube 3 zusammen und drückt somit auf die Hohlwelle 40.

Da die axial sich erstreckenden Schlitze in der Hohlwelle 40 vom Bund beabstandet sind, wird die Hohlwelle 40 in dem von den Schlitzen überdeckten axialen Bereich stärker verformt als in dem zwischen dem Bund 41 und dem von den schlitzen überdeckten axialen Bereich angeordneten axialen Bereich.

Das Ringteil 1 weist eine konische Fase 3 auf, welche an der dem Bund 41 und der Hohlwelle 40 zugewandten Innenkante des Ringteils 1 angeordnet ist. Somit ist die Schrumpfwirkung im von den schlitzen der Hohlwelle 40 überdeckten axialen Bereich ungestört. Denn in dem axialen Bereich zwischen Bund 41 und dem von den schlitzen überdeckten axialen Bereich berührt das Ringteil 1 die Hohlwelle 40 nicht.

Es ist also ein Freiraum zwischen Hohlwelle 40 und Ringteil 1 mittels der Fase 3 gebildet. Somit ist beim Aufschrumpfen des Ringteils 1 auf die Hohlwelle 40 der Druck auf den geschlitzten axialen Bereich der Hohlwelle 40 aufgebracht, nicht aber auf den ungeschlitzten Bereich, insbesondere welcher an den Bund 41 angrenzt.

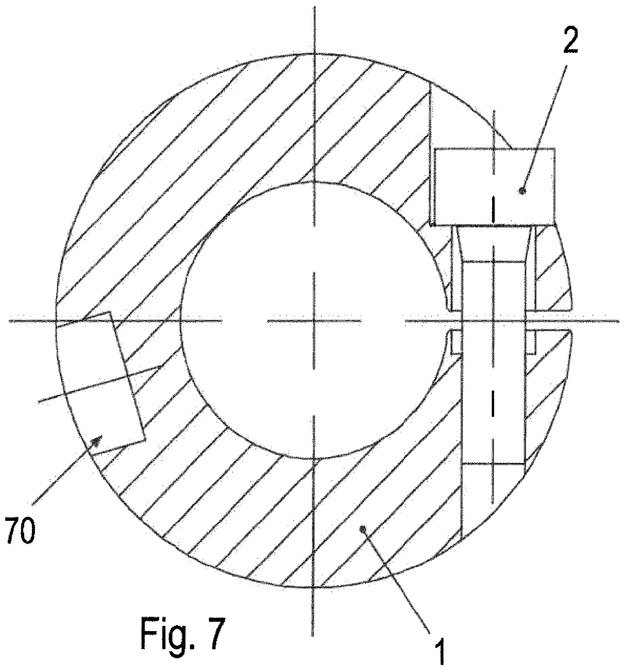

Wie in Figur 7 gezeigt, weist das Ringteil 1 der Schraube 2 gegenüberliegend eine Auswuchtbohrung 70 auf, die als radial gerichtete Bohrung ausgeführt ist.

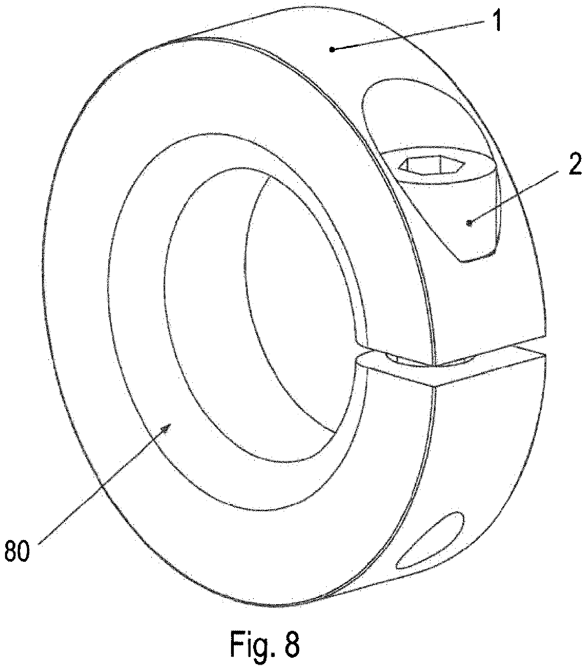

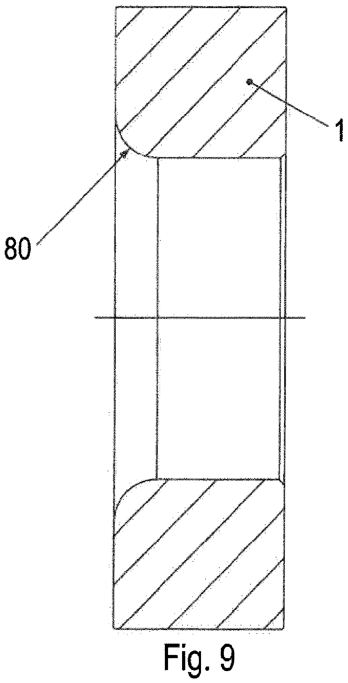

Wie in Figur 8 und Figur 9 dargestellt, ist bei einem erfindungsgemäßen Ausführungsbeispiel statt der konusförmigen Fase 3, welche als Querschnitt einen Geradenabschnitt aufweist und durch Rotation dieses Geradenabschnitts um die Ringachse des Ringteils 1 darstellbar ist, eine krümmungskegelförmige Fase 80 auf, welche durch Rotation eines gekrümmten Kurvenabschnitts entsteht. Der gekrümmte Kurvenabschnitt ist entweder ein Kreisabschnitt (nicht nach der Erfindung) so dass eine einfache Herstellung ausführbar ist, oder erfindungsgemäß ein Ellipsenabschnitt, so dass eine erhöhte Festigkeit im Übergangsbereich des Ringteils 1 zur Fase 80 hin erreicht ist. In jedem Fall geht die Fase 80 glatt über in den Bereich des Ringteils 1 mit kleinstem Innendurchmesser, also Berührbereich zur Hohlwelle 40 hin.

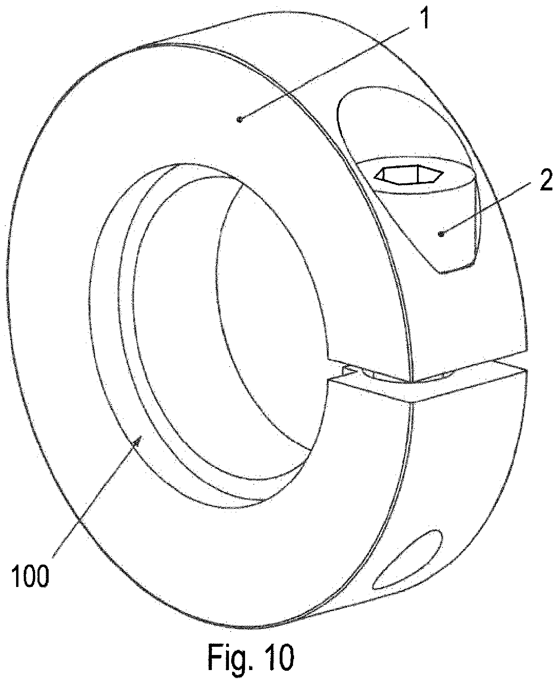

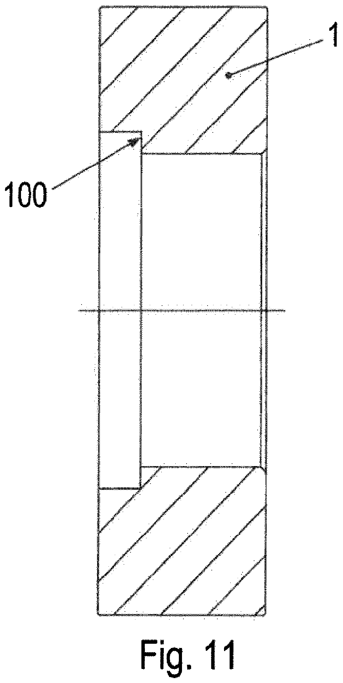

Wie in Figur 10 und Figur 11 dargestellt, ist bei einem nicht erfindungsgemäßen Ausführungsbeispiel statt der konusförmigen Fase 3 des ersten Ausführungsbeispiels und statt der Fase 80 des erfindungsgemäßen Ausführungsbeispiels eine Stufenfase 100, also einem zylindrischen Absatz, ausgeführt. Somit weist das Ringteil 1 im von der Stufenfase 100 überdeckten axialen Bereich einen insbesondere konstanten Innendurchmesser auf, welcher größer ist als der kleinste Innendurchmesser des Ringteils 1. Wichtig ist dabei, dass der im von der Stufenfase 100 überdeckten axialen Bereich vorhandene Innendurchmesser unterschiedlich ist von dem kleinsten Innendurchmesser des Ringteils 1, welchen dieses im Berührbereich zur Hohlwelle 40 hin, also im geschlitzten Bereich der Hohlwelle 40 aufweist.

### Bezugszeichenliste

- 1: Ringteil
- 2: Schraube
- 3: konusförmige Fase
- 40: Hohlwelle
- 41: Bund, insbesondere Bundkragen
- 80: krümmungskegelförmige Fase
- 70: Auswuchtbohrung
- 100: Stufenfase

## Patentansprüche

1. Verbindung, aufweisend eine in eine Hohlwelle (40) zumindest teilweise eingesteckte Welle und ein auf die Hohlwelle (40) aufgestecktes Ringteil, insbesondere eines Spannrings,
wobei das Ringteil (1) axial begrenzt ist von einem an der Hohlwelle (40) ausgeformten radial hervorstehenden Bund (41) oder das Ringteil (1) an einem an der Hohlwelle (40) ausgeformten radial hervorstehenden Bund (41) anliegt,
wobei die Hohlwelle (40) vom Bund (41) beabstandete Schlitze, insbesondere Axialschlitze, aufweist,
wobei das Ringteil (1) an seinem dem Bund (41) zugewandten axialen Endbereich eine Fase (80) aufweist,
so, dass der Innendurchmesser des Ringteils (1) in dem von der Fase (80) überdeckten axialen Bereich größer ist als der Innendurchmesser des Ringteils (1) in demjenigen axialen Bereich, in welchem das Ringteil (1) die Hohlwelle (40) berührt,
wobei die Fase (80) als krümmungskegelförmige Fase (80) ausgeführt ist, welche durch Rotation eines gekrümmten Kurvenabschnitts entsteht, der ein Ellipsenabschnitt ist,
wobei die Fase (80) glatt über in denjenigen Bereich des Ringteils (1), welcher die Hohlwelle (40) berührt, geht.

2. Verbindung nach Anspruch 1,
**dadurch gekennzeichnet, dass**
das Ringteil (1) an seinem Umfang einen radial und axial durchgehenden Schlitz aufweist,
wobei eine Schraube (2) durch den Schlitz hindurchgeführt ist und der Schraubenkopf der Schraube (2) ist an einer Fläche abgestützt, wobei der Gewindebereich der Schraube (2) in eine auf der von der Fläche abgewandten Seite des Schlitzes angeordneten Gewindebohrung eingeschraubt ist,
insbesondere wobei die Schraube (2) tangential gerichtet ist.

3. Verbindung nach mindestens einem der vorangegangenen Ansprüche,
**dadurch gekennzeichnet, dass**
das Ringteil (1) in einem in Umfangsrichtung von dem Schlitz beabstandeten Bereich eine radial gerichtete Bohrung aufweist, insbesondere zum Auswuchten des Spannrings.

4. Verbindung nach mindestens einem der vorangegangenen Ansprüche,
**dadurch gekennzeichnet, dass**
die radiale Breite des Ringteils (1) unabhängig vom Umfangswinkel ist, insbesondere mit Ausnahme des vom Schlitz überdeckten Umfangswinkelbereichs.

5. Verbindung nach mindestens einem der vorangegangenen Ansprüche,
**dadurch gekennzeichnet, dass**
der vom in die Hohlwelle (40) eingesteckten Bereich der Welle überdeckte axiale Bereich mit dem vom Ringteil (1) überdeckten axialen Bereich zumindest überlappt.

6. Verbindung nach mindestens einem der vorangegangenen Ansprüche,
**dadurch gekennzeichnet, dass**
die Schlitze der Hohlwelle (40) in Umfangsrichtung regelmäßig voneinander beabstandet sind.

7. Verbindung nach mindestens einem der vorangegangenen Ansprüche,
**dadurch gekennzeichnet, dass**
die Schlitze durch die Hohlwelle (40), insbesondere durch die Wandung der Hohlwelle (40), radial durchgehend, axial gerichtet sind.

8. Verbindung nach mindestens einem der vorangegangenen Ansprüche,
**dadurch gekennzeichnet, dass**
die Anzahl der Schlitze zwei oder größer ist.

9. Verbindung nach mindestens einem der vorangegangenen Ansprüche,
**dadurch gekennzeichnet, dass**
die Schraubenachse der Schraube (2) tangential ausgerichtet ist.

10. Verbindung nach mindestens einem der vorangegangenen Ansprüche,
**dadurch gekennzeichnet, dass**
die Hohlwelle (40) in dem von dem Ringteil (1) überdeckten axialen Bereich einen konstanten Außendurchmesser aufweist,
und/oder dass
der von der Fase (80) überdeckte axiale Bereich den vom Bund (41) überdeckten axialen Bereich berührt und/oder an diesen angrenzt,
und/oder dass
die Wandstärke und/oder der Querschnitt des Ringteils (1) unabhängig vom Umfangswinkel ist, insbesondere mit Ausnahme des Schlitzes konstant ist.

11. Verbindung nach mindestens einem der vorangegangenen Ansprüche,
**dadurch gekennzeichnet, dass**
das Ringteil (1) eine radial gerichtete, insbesondere nicht durchgehende Bohrung aufweist, welche von der Schraube (2) in Umfangsrichtung beabstandet ist,
insbesondere wobei die Bohrung derart tief ausgeführt ist, dass der Spannring, insbesondere also das Ringteil (1) samt Schraube (2), ausgewuchtet ist, insbesondere also der Spannring ausgewuchtet ist.

12. Verbindung nach mindestens einem der vorangegangenen Ansprüche,
**dadurch gekennzeichnet, dass**
das Ringteil (1) von der Hohlwelle (40) in dem von der Fase (80) überdeckten axialen Bereich beabstandet ist,
insbesondere wobei der von der Fase (80) überdeckte axiale Bereich sich anschließt an den geschlitzten Bereich der Hohlwelle (40), so dass die Schrumpfkraft des Ringteils (1) in den geschlitzten Bereich der Hohlwelle (40) eingetragen wird, nicht aber in den von der Fase (80) überdeckten axialen Bereich.

13. Planetengetriebemotor,
wobei die Rotorwelle des das Planetengetriebe antreibenden Elektromotors in eine als Hohlwelle (40) ausgeführte eintreibende Welle eingesteckt ist,
wobei ein Ringteil (1) auf die Hohlwelle (40) aufgesteckt ist,
so, dass die Welle mit der Hohlwelle (40) mittels des Ringteils (1) durch eine Verbindung nach mindestens einem der vorangegangenen Ansprüche verbunden ist.

## Claims

1. A connection, having a shaft, at least partially inserted in a hollow shaft (40), and a ring part, in particular of a clamping ring, placed onto the hollow shaft (40), wherein the ring part (1) is axially bounded by a radially projecting collar (41) formed on the hollow shaft (40) or the ring part (1) rests against a collar (41), formed on the hollow shaft (40) and radially projecting, wherein the hollow shaft (40) has slots, in particular axial slots, spaced apart from the collar (41), wherein the ring part (1) has a bevel (80) at its axial end region facing the collar (41), so that the inner diameter of the ring part (1) is greater in the axial region covered by the bevel (80) than the inner diameter of the ring part (1) in that axial region in which the ring part (1) contacts the hollow shaft (40), wherein the bevel (80) is in the form of a bevel (80) in the form of a curved taper, which arises through rotation of a curved curve portion which is an elliptical portion, wherein the bevel (80) smoothly becomes that region of the ring part (1) which contacts the hollow shaft (40).

2. A connection according to claim 1, **characterised in that** the ring part (1) has a radial and axially through-passing slot at its circumference, wherein a screw (2) is passed through the slot and the screw head of the screw (2) is supported on a surface, wherein the threaded region of the screw (2) is screwed into a tapped bore arranged on the slot side remote from the surface, in particular wherein the screw (2) is directed tangentially.

3. A connection according to at least one of the preceding claims, **characterised in that** the ring part (1) has a radially directed bore in a region spaced apart from the slot in the circumferential direction, in particular for balancing the clamping ring.

4. A connection according to at least one of the preceding claims, **characterised in that** the radial width of the ring part (1) is independent of the circumferential angle, in particular with the exception of the circumferential angular region covered by the slot.

5. A connection according to at least one of the preceding claims, **characterised in that** the axial region covered by the shaft region inserted in the hollow shaft (40) at least overlaps with the axial region covered by the ring part (1).

6. A connection according to at least one of the preceding claims, **characterised in that** the slots of the hollow shaft (40) are regularly spaced apart from one another in the circumferential direction.

7. A connection according to at least one of the preceding claims, **characterised in that** the slots pass radially through the hollow shaft (40), in particular through the wall of the hollow shaft (40), and are directed axially.

8. A connection according to at least one of the preceding claims, **characterised in that** the number of the slots is two or more.

9. A connection according to at least one of the preceding claims, **characterised in that** the screw axis of the screw (2) is tangentially directed.

10. A connection according to at least one of the preceding claims, **characterised in that** the hollow shaft (40) has a constant outer diameter in the axial region covered by the ring part (1), and/or in that the axial region covered by the bevel (80) contacts the axial region covered by the collar (41) and/or is adjacent thereto, and/or **in that** the wall thickness and/or the cross-section of the ring part (1) is independent of the circumferential angle, in particular is constant with the exception of the slot.

11. A connection according to at least one of the preceding claims, **characterised in that** the ring part (1) has a radially directed, in particular not through-passing, bore which is spaced apart from the screw (2) in the circumferential direction, in particular wherein the bore is such in depth that the clamping ring, in particular therefore the ring part (1) together with screw (2), is balanced, in particular therefore the clamping ring is balanced.

12. A connection according to at least one of the preceding claims, **characterised in that** the ring part (1) is spaced apart from the hollow shaft (40) in the axial region covered by the bevel (80), in particular wherein the axial region covered by the bevel (80) adjoins the slotted region of the hollow shaft (40), so that the shrink force of the ring part (1) is applied to the slotted region of the hollow shaft (40), not however to the axial region covered by the bevel (80).

13. A planetary gear motor, wherein the rotor shaft of the electric motor driving the planetary gear is inserted in an input shaft in the form of a hollow shaft (40), wherein a ring part (1) is placed onto the hollow shaft (40), so that the shaft is connected to the hollow shaft (40) by means of the ring part (1) by a connection according to at least one of the preceding claims.

## Revendications

1. Liaison comprenant un arbre emboîté au moins partiellement dans un arbre creux (40) et une pièce annulaire, faisant notamment partie d'une bague de serrage, emboîtée sur ledit arbre creux (40),
la pièce annulaire (1) étant délimitée axialement par une collerette (41) radialement en saillie, façonnée sur l'arbre creux (40),
ou bien ladite pièce annulaire (1) étant en applique contre une collerette (41) radialement en saillie, façonnée sur ledit arbre creux (40),
ledit arbre creux (40) étant muni de fentes, en particulier de fentes axiales situées à distance de ladite collerette (41),
sachant que la pièce annulaire (1) est pourvue d'un chanfrein (80) au niveau de sa région extrême axiale tournée vers la collerette (41),
de sorte que le diamètre intérieur de la pièce annulaire (1) est plus grand, dans la région axiale couverte par ledit chanfrein (80), que le diamètre intérieur de ladite pièce annulaire (1) dans la région axiale dans laquelle ladite pièce annulaire (1) est en contact avec l'arbre creux (40),
ledit chanfrein (80) étant réalisé sous la forme d'un chanfrein (80) à courbure tronconique auquel donne naissance la rotation d'un tronçon de courbe incurvé se présentant comme un segment d'ellipse,
sachant que ledit chanfrein (80) fusionne, avec profil lisse, dans la région de la pièce annulaire (1) qui est en contact avec l'arbre creux (40).

2. Liaison selon la revendication 1,
**caractérisée par le fait que**
la pièce annulaire (1) est munie, sur son pourtour, d'une fente ininterrompue dans les directions radiale et axiale,
sachant qu'une vis (2) traverse ladite fente de part en part, et que la tête de ladite vis (2) est en appui sur une surface, la région filetée de ladite vis (2) étant vissée dans un perçage taraudé situé du côté de la fente tourné à l'opposé de ladite surface,
sachant notamment que ladite vis (2) est dirigée tangentiellement.

3. Liaison selon au moins l'une des revendications précédentes,
**caractérisée par le fait que**
la pièce annulaire (1) comporte un alésage dirigé radialement dans une région située à distance de la fente dans la direction périphérique, notamment en vue de l'équilibrage de la bague de serrage.

4. Liaison selon au moins l'une des revendications précédentes,
**caractérisée par le fait que**
la largeur radiale de la pièce annulaire (1) n'est pas tributaire de l'angle circonférentiel à l'exception, en particulier, de la plage d'angles circonférentiels couverte par la fente.

5. Liaison selon au moins l'une des revendications précédentes,
**caractérisée par le fait que**
la région axiale, couverte par la région de l'arbre emboîtée dans l'arbre creux (40), est au moins en chevauchement avec la région axiale couverte par la pièce annulaire (1).

6. Liaison selon au moins l'une des revendications précédentes,
**caractérisée par le fait que**
les fentes de l'arbre creux (40) sont espacées régulièrement les unes des autres dans la direction périphérique.

7. Liaison selon au moins l'une des revendications précédentes,
**caractérisée par le fait que**
les fentes sont dirigées axialement en traversant radialement, de part en part, l'arbre creux (40) et notamment la paroi dudit arbre creux (40).

8. Liaison selon au moins l'une des revendications précédentes,
**caractérisée par le fait que**
les fentes sont au nombre de deux ou plus.

9. Liaison selon au moins l'une des revendications précédentes,
**caractérisée par le fait que**
l'axe de la vis (2) est orienté tangentiellement.

10. Liaison selon au moins l'une des revendications précédentes,
**caractérisée par le fait que**
l'arbre creux (40) présente un diamètre extérieur constant dans la région axiale couverte par la pièce annulaire (1) ;
et/ou **par le fait que**
la région axiale couverte par le chanfrein (80) est en contact avec la région axiale couverte par la collerette (41), et/ou est limitrophe de ladite région ;
et/ou **par le fait que**
l'épaisseur de paroi et/ou la section transversale de la pièce annulaire (1) est (sont) indépendante(s) de l'angle circonférentiel, et est (sont) constante(s) à l'exception de la fente en particulier.

11. Liaison selon au moins l'une des revendications précédentes,
**caractérisée par le fait que**
la pièce annulaire (1) comporte un alésage dirigé radialement, en particulier non traversant, situé à distance de la vis (2) dans la direction périphérique,
ledit alésage étant notamment pratiqué d'une profondeur propre à assurer un équilibrage de la bague de serrage, donc en particulier de la pièce annulaire (1) conjointement à la vis (2), c'est-à-dire de ladite bague de serrage en particulier.

12. Liaison selon au moins l'une des revendications précédentes,
**caractérisée par le fait que**
la pièce annulaire (1) est située à distance de l'arbre creux (40) dans la région axiale couverte par le chanfrein (80),
sachant notamment que ladite région axiale couverte par ledit chanfrein (80) se rattache à la région fendue dudit arbre creux (40), si bien que la force de contraction de ladite pièce annulaire (1) est induite dans ladite région fendue de l'arbre creux (40), mais toutefois pas dans ladite région axiale couverte par ledit chanfrein (80).

13. Moteur à engrenage planétaire
dans lequel l'arbre rotorique du moteur électrique entraînant ledit engrenage planétaire est emboîté dans un arbre d'entrée réalisé sous la forme d'un arbre creux (40),
une pièce annulaire (1) étant emboîtée sur ledit arbre creux (40),
de sorte que ledit arbre est relié audit arbre creux (40), au moyen de ladite pièce annulaire (1), par l'intermédiaire d'une liaison conforme à au moins l'une des revendications précédentes.
